# EUROPÄISCHE PATENTSCHRIFT

(11) **EP 3 909 735 B1**
(45) Veröffentlichungstag und Bekanntmachung des Hinweises auf die Patenterteilung: **27.11.2024**
(21) Anmeldenummer: 20174964.5
(22) Anmeldetag: 15.05.2020
(51) Int. Cl.: B01D 53/34, B01D 53/62, B01D 53/81

(54) **VERFAHREN ZUM AUFBEREITEN VON BETONGRANULAT DURCH CO2-BEHANDLUNG**
METHOD FOR UPGRADING OF CONCRETE GRANULATE BY MEANS OF CO2-TREATMENT
PROCÉDÉ DE PRÉPARATION DU GRANULES DE BÉTON PAR TRAITEMENT AU CO2

(43) Veröffentlichungstag der Anmeldung: 17.11.2021
(60) Teilanmeldung: 24180307.1
(73) Patentinhaber: Neustark AG, 3018 Bern (CH); ETH Zürich, 8092 Zürich (CH)
(72) Erfinder: GUTKNECHT, Valentin, 3012 Bern (CH); MAZZOTTI, Marco, 8044 Zürich (CH); TIEFENTHALER, Johannes, 8003 Zürich (CH)
(74) Vertreter: Rentsch Partner AG

(56) Entgegenhaltungen:
- EP-A1- 3 581 257
- DE-A1- 102018 123 115
- FR-A1- 3 081 863
- KR-B1- 100 970 431
- US-A1- 2007 154 380
- US-A1- 2016 046 532
- SEIDEMANN MARKO ET AL: "Gezielte Karbonatisierung rezyklierter Gesteinszuschläge zur simultanen Nutzung von Betonbruch und Verbesserung der Materialeigenschaften als Beitrag zur C02-Minderung", ABSCHLUSSBERICHT ÜBER EIN ENTWICKLUNGSPROJEKT, GEFÖRDERT UNTER DEM AZ:23689 VON DER DEUTSCHEN BUNDESSTIFTUNG UMWELT, 31 December 2010 (2010-12-31), pages 1 - 87, XP055917801
- ZHAN BAO JIAN ET AL: "Materials characteristics affecting CO2curing of concrete blocks containing recycled aggregates", CEMENT AND CONCRETE COMPOSITES, ELSEVIER APPLIED SCIENCE, BARKING, GB, vol. 67, 2 January 2016 (2016-01-02), pages 50 - 59, XP029409404, ISSN: 0958-9465, DOI: 10.1016/J.CEMCONCOMP.2015.12.003
- CHRISTIAN J. ENGELSEN ET AL: "Carbon dioxide uptake in demolished and crushed concrete", 1 December 2005 (2005-12-01), OSLO, pages 1 - 40, XP055520419, ISBN: 978-82-536-0900-3, Retrieved from the Internet <URL:http://www.nordicinnovation.org/Global/_Publications/Reports/2005/03018_carbon_dioxide_uptake_in_demolished_and_crushed_concrete.pdf> [retrieved on 20181031]
- ZHAN BAOJIAN ET AL: "Experimental study on CO2curing for enhancement of recycled aggregate properties", CONSTRUCTION AND BUILDING MATERIALS, ELSEVIER, NETHERLANDS, vol. 67, 26 September 2013 (2013-09-26), pages 3 - 7, XP029016617, ISSN: 0950-0618, DOI: 10.1016/J.CONBUILDMAT.2013.09.008
- SEIDEMANN M ET AL: "CO2 - Einbindung in Betonrezyklaten", 1 September 2013 (2013-09-01), pages 1 - 10, XP009523819, Retrieved from the Internet <URL:http://www.abw-recycling.de/r13/Seidemann_BUW_CO2-Einbindung_R13.pdf>
- MARKO SEIDEMANN ET AL: "Weiterentwicklung der Karbonatisierung von rezyklierten Zuschlägen aus Altbeton (2. Phase: Prozessoptimierung im Labormaßstab und Technologieentwurf)", 30 November 2015 (2015-11-30), pages 1 - 99, XP009523820, Retrieved from the Internet <URL:https://www.dbu.de/OPAC/ab/DBU-Abschlussbericht-AZ-23689_02.pdf>
- LIU L ET AL: "DEVELOPMENT OF A CO2 SOLIDIFICATION METHOD FOR RECYCLING AUTOCLAVED LIGHTWEIGHT CONCRETE WASTE", JOURNAL OF MATERIALS SCIENCE LETTERS, CHAPMAN AND HALL LTD. LONDON, GB, vol. 20, no. 19, 1 October 2001 (2001-10-01), pages 1791 - 1794, XP001242122, ISSN: 0261-8028, DOI: 10.1023/A:1012591318077

## Beschreibung

Die vorliegende Erfindung betrifft ein Verfahren zum Aufbereiten von Betongranulatfür das anschliessende Recyceln des Betongranulats. Die vorliegende Erfindung betrifft insbesondere ein Verfahren zum Anreichern von Betongranulat mit CO2.

Für die Betonherstellung ist neben Kies und Sand vor allem Zement von zentraler Bedeutung. Die Herstellung von Zement setzt jedoch nicht nur erhebliche Treibhausgasemissionen frei, sie ist auch ein wesentlicher Kostenfaktor in der Betonerzeugung. Heute schon nimmt das Recyceln von Beton einen wichtigen Stellenwert ein, wenn es darum geht, die Ressourcen Kies und Sand zu schonen. Allerdings kann durch herkömmliche Recyclingverfahren weder Zement wiedergewonnen noch Treibhausgasemissionen rückgängig gemacht oder vermieden werden. Das herkömmliche Recyceln erfolgt in der Regel durch den Rückbau abrissbereiter Häuser oder anderer Betonkörper. Der Abrissbeton wird anschliessend zu Betongranulat zerkleinert, das z.B. als Kiesersatz bei der Herstellung von neuen Beton dienen kann. Unter der Zugabe von neuem Zement entsteht Recyclingbeton. Dieser herkömmliche Recyclingbeton weist jedoch in der Regel verminderte mechanische Eigenschaften im Vergleich zu dem primären Beton auf. Unter primärem Beton wird nicht-recycelter Beton verstanden. Daher wird in der Regel in dem herkömmlich recycelten Beton wiederum der Zementgehalt um 10 % erhöht, um recycelten Beton in einer ähnlichen Qualität, wie die des primären Betons zu erhalten. Weiterhin kann das aus dem Abrissbeton gewonnene Betongranulat lose in einem ungebundenen Zustand, z.B. als Strassenbaumaterial, verwendet werden. Die Anwendung ist jedoch stark begrenzt, da herstellungsbedingt im Beton toxische Metalle enthalten sind, welche insbesondere im losen (ungebundenen) Zustand des aus dem Stand der Technik bekannten Betongranulats durch Regenwasser gelöst werden können und so das Grundwasser verunreinigen können. Aus den genannten Gründen gewinnt man durch heutiges Betonrecycling allenfalls minderwertigen Kiesersatz; allerdings lassen sich durch diese Rückgewinnung weder die Treibhausgasemissionen des Betons senken noch lässt sich das Betongranulat bedenkenlos lose verwenden.

Aus dem Stand der Technik sind Verfahren zum Aufbereiten von Betongranulat bekannt. Beispiele hiervon finden sich in den Veröffentlichungen von Zhan et al. "Materials characteristics affecting CO2curing of concrete blocks containing recycled aggregates",CEMENT AND CONCRETE COMPOSITES, ELSEVIER APPLIED SCIENCE, BARKING, GB, Bd. 67, 2. Januar 2016, S. 50-59, (XP029409404), Englsen et AI. "Carbon dioxide uptake in demolished and crushed concrete",, 1. Dezember 2005, S. 1-40, OSLO, ISBN: 978-82-536-0900-3, (XP055520419), Sereng et al. "EFFECT OF CARBONATION ON RECYCLED CONCRETE AGGREGATES AND WATER ABSORPTION", International Workshop. CO2 Storage in Concrete - CO2STO2019, 24. Juni 2019), S. 1-11, (XP093134291), Dos Reis at al. "ACCELERATED CARBONATION OF COARSE AGGREGATES BY USING A ROTATING SYSTEM IN ORDER TO IMPROVE ITS PROPERTIES", Proceedings of the International Workshop CO2 Storage in Concrete - CO2STO2019, 1. Januar 2019, S. 99-108, (XP093134294).

Die Aufgabe der Erfindung besteht darin, ein verbessertes Verfahren zum Aufbereiten von Betongranulat für das anschliessende Recyceln des Betongranulats bereitzustellen. Vorzugsweise werden dabei insbesondere die zuvor genannten Probleme bekannter Recyclingverfahren zumindest teilweise behoben.

Zum Aufbereiten von Betongranulat für das anschliessende Recyceln des Betongranulats kann dieses mit Kohlenstoffdioxid (folgend als CO2 abgekürzt) behandeltwerden. Im Vergleich zu einem recycelten Referenzbeton (umfassend Zement, Kies, Sand und nicht angereichertes Betongranulat) mit einem angereicherten Beton mit im Wesentlichen gleicher Zusammensetzung kann der angereicherte Beton (umfassend Zement, Kies, Sand und mit CO2 angereichertes Betongranulat) eine höhere Druckfestigkeit bei im Wesentlichen gleichbleibendem Ausbreitmass aufweisen. Letzteres ist eine Kenngrösse für die Konsistenz von Frischbeton. Ebenfalls kann bei einer entsprechenden Reduzierung des Zementanteils des angereicherten Betons im Vergleich zu dem Referenzbeton mit unveränderter Zusammensetzung eine gleiche Druckfestigkeit erzielt werden.

Diese Zusammenhänge können in den folgenden Tabellen nachvollzogen werden. Diese stellen Zusammensetzungen (Tabelle 1) und Messergebnisse (Tabelle 2) von einem Referenzbeton und verschiedenen Versuchsbetonen dar. Der Referenzbeton umfasst hierbei herkömmliches Betongranulat, welches nicht mit CO2 angereichert ist. Das Betongranulat der Versuchsbetone ist hingegen mit CO2 angereichert. Die Druckfestigkeit wurde gemäss der Norm SN EN 206: 2013 +A1:2016 und gemäss dem SIA Merkblatt '2030 Recyclingbeton' bestimmt. Das Ausbreitmass wurde gemäss der Norm SN EN 12350-5: 2019 bestimmt.

**Tabelle 1**

| Bezeichnung | Zement CEM II/B-LL (kg/m³) | Wasser (kg/m³) | Sand und Kies (kg/m³) | Betongranulat (kg/m³) | CO2 (kg/m³) |
|---|---|---|---|---|---|
| Referenzbeton | 315 | 191 | 1134 | 756 | 0 |
| Versuchsbeton 1 | 315 | 186 | 1117 | 746 | 5.1 |
| Versuchsbeton 2 | 315 | 183 | 755 | 1133 | 7.6 |
| Versuchsbeton 3 | 290 | 167 | 1080 | 719 | 4.9 |

**Tabelle 2**

| Bezeichnung | Druckfestigkeit (N/mm²) | Ausbreitmass (cm) |
|---|---|---|
| Referenzbeton | 43.8 | 48 |
| Versuchsbeton 1 | 46.9 | 48 |
| Versuchsbeton 2 | 47.7 | 47 |
| Versuchsbeton 3 | 45.3 | 47 |

Der angereicherte Beton mit entsprechend reduziertem Zementanteil (z.B. Versuchsbeton 3) weist somit deutlich reduzierte Treibhausgasemissionen auf. Beispielsweise können bei einer Zementreduktion von 10% die Emissionen der Betonherstellung um ca. 8.5% gesenkt werden. Andererseits können bereits vorhandene CO2 Emissionen während des Verfahrens an das Betongranulat gebunden und somit reduziert werden. Beispielsweise können durchschnittlich bei 10 kg CO2 pro 1 000kg Betongranulat die Emissionen im Schnitt um weitere 4 % gesenkt werden. Unter idealen Voraussetzungen kann die Technologie die CO2 Emissionen der Herstellung von Recyclingbeton somit um ca. 12,5 % senken.

Des Weiteren hat sich gezeigt, dass der angereicherte Beton einen höheren Karbonatisierungswiderstand aufweist. Der Karbonatisierungswiderstand ist hierbei ein entscheidender Faktor für die Korrosion einer im Beton vergossenen Bewehrung und auftretenden Schäden im Betonbau. Ebenso kann die Anreicherung des Betongranulats mit CO2 dazu führen, dass die oben erwähnten toxischen Metalle besser gebunden werden und dessen ungewolltes Entweichen in die Umwelt deutlich reduziert werden kann. Dies erweitert die Anwendungsmöglichkeiten des losen Betongranulats.

Ein anspruchsgemässes Verfahren zum Aufbereiten, insbesondere zum Anreichern mit CO2, von Betongranulat für das anschliessende Recyceln umfasst die folgenden Verfahrensschritte: Befüllen eines zumindest bereichsweise gasdichten Behälters mit Betongranulat. Zufuhr eines Volumenstroms an Gas umfassend CO2 in Abhängigkeit eines über mindestens einen Sensor bestimmten Masses einer erfolgten CO2-Absorption durch das Betongranulat im Behälter. Die Zufuhr des Gases kann hierbei kontinuierlich oder nicht kontinuierlich erfolgen. Feststellen, ob eine vorgegebene CO2-Sättigung des Betongranulats zwischen 5kg CO2 pro 1000 kg und 15kg CO2 pro 1000 kg erreicht ist, und anderenfalls Fortführung des vorherigen Verfahrensschritts betreffend die Zufuhr des Gases. Sollte noch keine vorgegebene CO2-Sättigung des Betongranulats vorliegen, kann das Gas je nach Anwendung kontinuierlich oder nicht-kontinuierlich zugeführt werden bis diese erreicht wird. Ferner umfasst das Verfahren die Entnahme des mit CO2 angereicherten Betongranulats aus dem Behälter. Nach der Entnahme des Betongranulats kann dieses in einem weiteren Verfahrensschritt zur Herstellung von recycelten (angereicherten) Beton umfassend das mit CO2 angereicherte Betongranulat verwendet werden. Hierzu kann das mit CO2 angereicherte Betongranulat mit Zement, Wasser, Sand und Kies zu Beton verarbeitet werden.

Unter einer CO2-Absorption des Betongranulats wird verstanden, dass das CO2 in das Betongranulat diffundiert und eine chemische Reaktion eingeht. Für diesen Absorptionsprozess muss kein zusätzliches Wasser, insbesondere in flüssiger Form, in den Behälter dazugegeben werden. Das Betongranulat umfasst Poren, in welche das CO2 diffundieren kann. In den Poren kann Wasser vorhanden sein, auch Porenwasser genannt, mit welchem das CO2 eine chemische Reaktion eingeht. Das Porenwasser steht mit den Zementphasen des Betongranulats in einem Phasengleichgewicht und umfasst Kalziumionen. Wenn CO2 (chemisch) absorbiert wird entstehen Karbonat- und Bikarbonationen. Die entstehende Porenlösung wird so in Bezug auf Kalziumkarbonat (CaCO3), respektive deren polymorphe Minerale Kalzit, Argonot und Veterit, übersättigt und die Poren ausgefüllt.

Das Betongranulat kann je nach Zusammensetzung jedoch nur eine bestimmte Menge an CO2 aufnehmen. Diese maximale CO2-Sättigung kann je nach Zusammensetzung zwischen 30 - 45 kg CO2 pro 1000 kg Betongranulat liegen. Wenn beispielsweise pro Ausgangsvolumen an Gas keine Änderung der CO2-Konzentration und/oder Änderung des Druckes mehr festgestellt werden kann, ist die maximale CO2-Sättigung des Betongranulats erreicht. Jedoch wird das erfindungsgemässe Verfahren vorher beim Erreichen einer vorgegebenen CO2-Sättigung unterhalb der maximalen CO2-Sättigung abgebrochen. Hohe Sättigungswerte können nur bei ausreichend langer Begasung mit CO2 erreicht werden und benötigen entsprechend grössere Mengen an CO2. Gute Materialeigenschaften werden jedoch bereits bei einer vorgegebenen CO2-Sättigung zwischen 5kg CO2 pro 1000kg bis 15kg CO2 pro 1000kg erreicht. Dies entspricht einer vorgegebenen CO2-Sättigung von etwa 10% bis 50% der maximalen CO2-Sättigung.

Die Menge des absorbierten CO2 im Betongranulat nimmt in der Regel exponentiell über die Zeit ab bis die maximale CO2-Sättigung erreicht ist. In einer nicht unter den Wortlaut des Anspruchs fallenden Variante kann die vorgegebene CO2-Sättigung beispielsweise als erreicht betrachtet werden, wenn über ein bestimmtes Zeitintervall die Änderung des Masses der CO2-Absorption kleiner ist als ein vorgegebener Grenzwert. In einer alternativen oder zusätzlichen nicht unter den Wortlaut des Anspruchs fallenden Variante kann zur Feststellung der vorgegebenen CO2-Sättigung beispielsweise das über den mindestens einen Sensor bestimmte Mass der erfolgten CO2-Absorption über die Zeit aufgetragen und extrapoliert werden. Über die Extrapolation kann ein (theoretischer) Grenzwert des Masses der erfolgten CO2-Absorption bestimmt werden, welcher der maximalen CO2-Sättigung des Betongranulats im Behälter entspricht. Bei Erreichen eines vorgegebenen Prozentsatzes dieses Grenzwertes (respektive der vorgegebenen CO2-Sättigung) kann die Gaszufuhr beendet werden.

Die Zufuhr des Gases in den Behälter, respektive eine Einstellung des zugeführten Volumenstroms in den Behälter, kann über eine Verstellung eines Einlassventils vorgenommen werden. Das Einlassventil kann in der Zuleitung des Behälters angeordnet sein. Die Einstellung des Einlassventils, respektive des Volumenstroms, in Abhängigkeit des Masses der erfolgten CO2-Absorption erfolgt durch eine Kontrolleinheit, welche mit dem mindestens einen Sensor, sowie dem Einlassventil wirkverbunden ist. Mit Vorteil gleicht der zugeführte Volumenstrom an Gas (nach einer initialen Befüllung des Behälters) hierbei das bereits absorbierte CO2 aus. Auf diese Weise liegt im Behälter eine möglichst gleichbleibende CO2-Konzentration vor. Dies hat den Vorteil, dass bei höherer CO2-Konzentration und gleichmässiger Verteilung von CO2 im Behälter das Verfahren einerseits schneller verläuft und andererseits eine gleichmässige Anreicherung von CO2 in dem Betongranulat erzielt werden kann. Die Kontrolleinheit kann hierbei aus der bekannten Zusammensetzung des Gases, respektive dem CO2 Gehalt des Gases, sowie aus dem bekannten zugeführten Volumenstrom durch das Einlassventil eine theoretisch im Behälter vorhandene Menge an CO2 bestimmen, welche ohne Absorption von CO2 vorläge. Ebenso kann ein theoretischer Druck im Behälter bestimmt werden. Das Einlassventil kann hierzu einen Durchflusssensor zur Bestimmung des durch das Einlassventil durchgeführten Volumenstroms umfassen, oder ein Durchflusssensor kann dem Einlassventil vor-oder nachgeschaltet sein. Alternativ oder ergänzend kann zur Verwendung des Durchflusssensors der durchgeführte Volumenstrom in Abhängigkeit der Einstellung des Einlassventils als Datensatz in einer Kontrolleinheit hinterlegt sein.

Die Zufuhr des Gases kann zumindest vorübergehend unterbrochen werden (nicht-kontinuierliche Zufuhr des Gases). Dies kann durch wiederholtes Durchführen der folgenden Schrittfolge geschehen: Öffnen des mit dem Behälter fluidisch wirkverbundenen Einlassventils, Zufuhr des Gases umfassend CO2 in den Behälter und Schliessen des Einlassventils. Bei geschlossenem Einlassventil kann das Mass der erfolgten CO2-Absorption besonders einfach bestimmt werden. Der bei geöffneten Einlassventil zugeführte Volumenstrom an Gas gleicht mit Vorteil das zwischenzeitlich (während des geschlossenen Einlassventils) absorbierte CO2 aus. Diese nicht-kontinuierliche Begasung kann so lange fortgeführt werden, bis die vorgegebene CO2-Sättigung des Betongranulats erreicht ist. Eine nicht-kontinuierliche Zufuhr des Gases eignet sich besonders bei Behältern, welche (während der Begasung) bereichsweise offen zur Umwelt beziehungsweise Umgebungsluft sind. Ein solcher Behälter kann insbesondere nach oben offen sein.

Alternativ zu der nicht-kontinuierlichen Begasung kann der Volumenstrom in Abhängigkeit des Masses der erfolgten CO2-Absorption über die Dauer der Begasung kontinuierlich angepasst werden (kontinuierliche Zufuhr des Gases). Mit Vorteil gleicht der zugeführte Volumenstrom an Gas hierbei das bereits absorbierte CO2 aus. Bei einer exponentiell über die Zeit abnehmenden Absorption von CO2 kann der zugeführte Volumenstrom so eingestellt werden, dass dieser entsprechend exponentiell abnimmt.

Eine (initiale) Befüllung des Behälters mit dem Gas kann durchgeführt werden, bis ein gewünschter Füllstand des Behälters mit dem Gas erreicht ist. Alternativ oder in Ergänzung kann die (initiale) Befüllung des Behälters durchgeführt werden, bis im Behälter eine vorgegebene CO2-Konzentration, insbesondere eine Konzentration von über 95% CO2, vorliegt. Nach der initialen Befüllung kann der Volumenstrom reduziert werden (weitere kontinuierliche Zufuhr) oder zwischenzeitlich unterbrochen werden (nicht-kontinuierliche Zufuhr). Hierbei kann der weiter zugeführte Volumenstrom, wie bereits beschrieben, derart kontrolliert werden, dass das im Behälter absorbierte CO2 ausgeglichen wird.

Zur Bestimmung des Masses der erfolgten CO2-Absorption durch das Betongranulat kann mindestens ein Sensor im Behälter angeordnet sein, respektive mit diesem fluidisch wirkverbunden sein. Der mindestens eine Sensor kann beispielsweise ein CO2-Konzentrationssensor zur Messung der CO2-Konzentration im Behälter sein. Aus der zugeführten Menge an CO2 (und ggf. einer gemessenen Menge an abgeführten CO2) kann eine theoretische Menge an CO2 im Behälter (ohne Absorption) bestimmt werden. Das Mass für die Absorption kann somit aus der Differenz der theoretischen Menge an CO2 und der tatsächlichen (gemessenen) Menge an CO2 über den Konzentrationssensor im Behälter bestimmt werden. Die vorgegebene CO2-Sättigung wird als erreicht erachtet, bzw. die Begasung abgebrochen, wenn ein Grenzwert für die oben beschriebene Differenz über die gesamte bisherige Verfahrensdauer erreicht wurde. Wie oben beschrieben kann die vorgegebene CO2-Sättigung in einer nicht unter den Wortlaut des Anspruchs fallenden Variante kann beispielsweise erreicht sein, wenn über ein bestimmtes Zeitintervall die Differenz der theoretischen Menge an CO2 und der tatsächlichen Menge an CO2 im Behälter kleiner ist als ein vorgegebener Grenzwert. Wiederum alternativ und nicht unter den Wortlaut des Anspruchs fallend, kann die vorgegebene CO2-Sättigung erreicht sein, wenn ein durch Extrapolation bestimmter theoretischer Grenzwert des Masses der CO2-Absorption erreicht ist. Die Bestimmung des Masses der erfolgten CO2-Absorption über die Messung der CO2-Konzentration ist besonders geeignet bei nicht gasdicht verschliessbaren Behältern. Alternativ oder ergänzend zu einem CO2-Konzentrationssensor kann ein Mass der erfolgten CO2-Absorption durch das Betongranulat ebenfalls durch eine Messung des Druckes bestimmt werden. Der Druck eines vorgegebenen Volumens an Gas umfassend CO2 sinkt, wenn das CO2 mit dem Betongranulat in Kontakt tritt und CO2 absorbiert wird. D.h. die Differenz eines theoretischen Druckes, welcher im Behälter ohne Absorption vorliegen müsste, und dem tatsächlich im Behälter gemessenen Druckes kann als Mass der erfolgten CO2-Absorption herangezogen werden. Der theoretische Druck kann über das bekannte Behältervolumen, sowie dem zugeführten (und optional einem abgeführten) Volumenstrom zumindest annähernd bestimmt werden. Die Bestimmung des Masses der erfolgten CO2-Absorption über die Messung des Druckes eignet sich besonders für einen gasdicht verschliessbaren Behälter, insbesondere bei einer nicht-kontinuierlichen Zufuhr an Gas in den Behälter.

Ergänzend kann die Bestimmung des Masses der erfolgten CO2-Absorption zusätzlich eine gemessene Temperatur berücksichtigen. Da bei der chemischen Reaktion Hitze freigesetzt wird, kann diese Temperaturänderung ebenfalls auf den Druck Einfluss nehmen. Durch eine ergänzende Temperaturmessung kann der Einfluss der Temperaturänderung auf den theoretischen Druck berücksichtig werden. Eine ergänzende Temperaturmessung kann ebenfalls bei der Bestimmung des Masses der erfolgten CO2-Absorption über die Messung der CO2-Konzentration berücksichtigt werden.

Alternativ oder ergänzend kann die Bestimmung des Masses der erfolgten CO2-Absorption zusätzlich ein gemessenes Gewicht berücksichtigen. Hierzu kann mindestens ein Sensor eine mit dem Behälter und der Kontrolleinheit wirkverbundene Waage beziehungsweise Wägezelle sein. Beispielsweise kann über das vor der Begasung gemessene Gewicht des Betongranulats das zur Verfügung stehende Volumen im Behälter für die Begasung zumindest annähernd bestimmt werden. Dieses kann z.B. in die Bestimmung des theoretischen Druckes einfliessen. Weiterhin kann die Gewichtsdifferenz des Betongranulats vor der Begasung und des mit CO2 angereicherten Betongranulats nach der Begasung bestimmt werden. Diese gibt Rückschluss über die konkret absorbierte Menge an CO2. Diese Informationen können beispielsweise von Unternehmen für CO2 Zertifikate, auch Emissionszertifikate genannt, genutzt werden, um mit diesen zu handeln.

Je nach Ausführung kann ergänzend die relative Feuchte im Behälter gemessen werden, da bei der Absorption von CO2 gasförmiges Wasser freigesetzt wird. Während das zugeführte Gas eine relative Feuchte von weniger als 1 % aufweisen kann, kann im Behälter bei Erreichen der maximalen CO2-Sättigung eine relative Feuchte von 50 % - 95 % vorliegen. Die Bestimmung des Masses der erfolgten CO2-Absorption kann somit zusätzlich die gemessene relative Feuchte berücksichtigen.

Wie bereits beschrieben, kann die Bestimmung des Masses der erfolgten CO2-Absorption durch die Messungen des Druckes und/oder der CO2-Konzentration durch eine Messung des Gewichtes und/oder der Temperatur und/oder der relativen Feuchte genauer bestimmt werden. Beispielsweise können die gemessenen und/oder bekannten Werte über physikalische Zusammenhänge, wie z.B. die ideale Gasgleichung und Massenerhaltungssätze, miteinander in Relation gebracht werden. Dies ermöglicht eine genauere und umfänglichere Überwachung der erfolgten CO2-Absorption.

Je nach Zusammensetzung kann das in den Behälter zugeführte Gas neben CO2 ebenfalls gasförmiges Wasser und/oder Stickstoff und/oder Sauerstoff umfassen. Das in den Behälter zuzuführende Gas kann vor seiner Zuführung in den Behälter in einem Speichertank als Flüssigkeit und/oder als Gas gespeichert sein. Mit Vorteil umfasst das Gas 95 % bis 100 % CO2. Je nach Anwendung kann das Gas erneuerbares CO2 umfassen. Unter erneuerbarem CO2 wird biogenes CO2 oder aus der Atmosphäre gewonnenes CO2 verstanden. Biogenes CO2 hat den Vorteil, dass es in der Regel bereits in reiner Form gewonnen werden kann und nicht mehr aufbereitet werden muss. Biogenes CO2 kann z.B. als Nebenprodukt der Biomethanproduktion oder aus der Verbrennung von Biomasse (biologisches Material, welches Kohlenstoff, Wasserstoff und Sauerstoff umfasst) gewonnen werden. Alternativ kann das Gas ebenfalls ein Abgas umfassend 10 - 25 % CO2 sein. Beispielsweise kann ein Abgas aus einem Zementwerk zur Herstellung von Zement verwendet werden.

Primärer Beton umfasst in der Regel Sand, Kies und Zement. Das Betongranulat, welches z.B. als Abrissbeton gewonnen wird, kann je nach Art der vorherigen Verwendung, zudem Mörtel umfassen. Das Betongranulat umfasst in der Regel 4 - 10 Gewichtsprozent Calciumoxid. Das Betongranulat umfasst insbesondere hydrierten Zement. Hydrierter Zement ist hierbei derart zu verstehen, dass der Zement eine Reaktion mit Wasser durchgeführt hat und dieses an den Zement angelagert ist. Diese Reaktion wird als Hydratation und das Reaktionsprodukt als hydrierter Zement bezeichnet. Bei einer Hydratation kann der Zement bis zu 25 % seiner Masse an Wasser chemisch und bis zu 15 % seiner Masse physikalisch binden. Zum Aufbereiten kann der Abbruchbeton zerkleinert werden. Gute Resultate beim Aufbereiten werden erzeugt, wenn die Partikel einen Durchmesser von 0.05 mm bis 50 mm aufweisen. Zum Aufbereiten können die Bestandteile des Betongranulats in der Regel nicht voneinander getrennt werden.

Nach Erreichen der vorgegebenen CO2-Sättigung kann das im Behälter vorhandene überschüssige Gas abgelassen werden. Dieses kann zur Wiederverwendung aufbereitet werden und in den Speichertank der Anlage zurückgeführt werden. Alternativ kann das überschüssige Gas ebenfalls in einen mit Betongranulat befüllbaren Auffangbehälter eingebracht werden, in welchem das Verfahren von neuem durchgeführt wird. Das Verfahren kann beispielsweise alternierend in dem Behälter und dem Auffangbehälter durchgeführt werden. Alternativ kann der mit weiterem Betongranulat befüllte Auffangbehälter als ein passiver Filter, d.h. ohne aktive Kontrolle der CO2-Sättigung, dienen. Das in diesem angeordnete Betongranulat kann das überschüssige Gas zumindest teilweise, insbesondere aber auch vollständig, absorbieren.

Vor der Zufuhr des Gases umfassend CO2 kann neben dem Betongranulat Luft im Behälter vorhanden sein. Wenn das Einlassventil für die Begasung geöffnet wird, entsteht somit ein Gasgemisch im Behälter, welches CO2 und Luft umfasst. Um die CO2-Konzentrationim Behälter zu erhöhen kann, insbesondere bei der initialen Befüllung des Behälters, neben der Zufuhr von Gas umfassend CO2 kontinuierlich oder nicht kontinuierlich das Gasgemisch aus dem Behälter abgelassen werden Bei diesem Vorgang erhöht sich mit Vorteil der Anteil an CO2 im Behälter. Das aus dem Behälter abgelassene Gasgemisch kann, wie für das überschüssige Gas beschrieben, aufbereitet werden oder in einen Auffangbehälter geführt werden. Nach Erreichen einer vorgegebenen CO2-Konzentration im Behälter kann die Abfuhr des Gasgemisches und optional zumindest vorrübergehend ebenfalls die Zufuhr des Gases gestoppt werden.

Die Abfuhr des Gases aus dem Behälter kann über ein Auslassventil kontrolliert werden. Das Auslassventil kann, wie das Einlassventil, einen Durchflusssensor zur Bestimmung des durch das Auslassventil durchgeführten Volumenstroms umfassen, oder ein Durchflusssensor kann dem Auslassventil vor- oder nachgeschaltet sein. Der vor- oder nachgeschaltete Durchflusssensor ist ebenfalls mit der Kontrolleinheit wirkverbunden. Alternativ oder ergänzend kann zur Verwendung des Durchflusssensors der durchgeführte Volumenstrom in Abhängigkeit der Einstellung des Auslassventils als Datensatz in einer Kontrolleinheit hinterlegt sein. Ergänzend kann dem Auslassventil ebenfalls ein CO2- Konzentrationssensor vor- oder nachgeschaltet sein.

Die Zufuhr und/oder die Abfuhr des Gases kann durch mindestens eine Pumpe kontrolliert werden, welche mit der Kontrolleinheit wirkverbunden ist. Die Zufuhr des Gases in den Behälter und/oder die Abfuhr des Gasgemisches aus dem Behälter und/oder die Abfuhr des überschüssigen Gases aus dem Behälter kann z.B. durch einen Unterdruck (in Relation zu einem Umgebungsdruck) erzeugt werden. Der Unterdruck kann zwischen 80000 und 96000 Pascal liegen. Jedoch kann das Verfahren ebenfalls bei Umgebungsdruck oder grösseren Drücken durchgeführt werden.

Nachstehend wird eine Anlage (zum Durchführen des erfindungsgemässen Verfahrens) zum Aufbereiten von Betongranulat, insbesondere zum Anreichern mit CO2, für das anschliessende Recyceln des Betongranulats erläutert. Die Anlage umfasst einen Speichertank sowie einen zumindest bereichsweise gasdichten Behälter. Das in den Behälter zuzuführende Gas kann zuvor in flüssiger Form und/oder in gasförmiger Form in dem Speichertank gespeichert oder zwischengelagert werden. Der Behälter kann hierbei mindestens eine Öffnung zur Aufnahme und/oder Entnahme des Betongranulats aufweisen. Der Behälter umfasst weiter einen Einlass zur Zuführung des Gases in den Behälter, welcher über eine Zuleitung mit dem Speichertank fluidisch wirkverbindbar ist. Ein Einlassventil dient hierbei zur Kontrolle des zuzuführenden Volumenstroms an Gas in den Behälter. Das Einlassventil kann ein Proportionalventil sein. Die Anlage umfasst ebenfalls mindestens einen Sensor (wie oben beschrieben) und eine Kontrolleinheit, welche mit dem mindestens einen Sensor und dem Einlassventil wirkverbunden ist. Der Sensor dient zur Bestimmung eines Masses der erfolgten CO2-Absorption durch das Betongranulat im Behälter durch die Kontrolleinheit. Die Kontrolleinheit ist dazu ausgelegt den Volumenstrom an Gas durch das Einlassventil zu kontrollieren. Des Weiteren kann die Kontrolleinheit ebenfalls mit einer Pumpe wirkverbunden sein. Die Pumpe kann in einer Zuleitung oder einer Ableitung des Behälters angeordnet sein. Die Pumpe kann eine Vakuumpumpe sein. Diese kann zur Erzeugung eines Unterdruckes, wie oben beschrieben, dienen.

Die Kontrolle des Volumenstroms erfolgt mit Vorteil automatisch. Entsprechend dem oben beschriebenen Verfahren ist die Kontrolleinheit dazu ausgelegt, die folgenden Schritte wiederholt durchzuführen: Zufuhr von einem Volumenstrom an Gas umfassend CO2 in Abhängigkeit des über den mindestens einen Sensor bestimmten Masses der erfolgten CO2-Absorption durch das Betongranulat im Behälter und feststellen, ob eine vorgegebene CO2-Sättigung des Betongranulats erreicht ist. Falls die vorgegebene CO2-Sättigung des Betongranulats noch nicht erreicht ist, kann der vorherige Schritt der Gaszufuhr fortgeführt werden, bis die vorgegebene CO2-Sättigung vorliegt.

Für eine effiziente Begasung ist der Behälter mit Vorteil zumindest bereichsweise gasdicht. Je nach Ausgestaltung des Behälters kann dieser einen Behälterboden und mindestens eine umlaufende Seitenwand umfassen. Diese umgeben einen Aufnahmeraum des Behälters zur Aufnahme des Betongranulats. Die mindestens eine Seitenwand kann beispielsweise röhrenförmig sein. Die röhrenförmige Seitenwand kann einen runden oder einen eckigen Querschnitt aufweisen. Mit Vorteil sind der Boden und die mindestens eine Seitenwand gasdicht ausgestaltet. Je nach Anwendung kann das Betongranulat über eine einzige Öffnung eingefüllt und entnommen werden. Mit Vorteil umfasst die Anlage jedoch eine erste Öffnung zum Befüllen mit Betongranulat und eine zweite Öffnung zum Entnehmen des Betongranulats. Beispielsweise können eine erste (obere) Öffnung und eine dieser in Bezug auf die Gravitationsrichtung gegenüberliegende zweite (untere) Öffnung vorgesehen sein. In diesem Fall kann beim Öffnen der zweiten (unteren) Öffnung das Betongranulat automatisch aus den Behälter fallen. Bei dieser Ausführungsform kann insbesondere lediglich die zweite (untere) Öffnung gasdicht verschliessbar ausgestaltet sein, während die erste (obere) Öffnung offengelassen werden kann. Jedoch sind auch Ausgestaltungen möglich, bei denen beide Öffnungen gasdicht verschliessbar sind. Hierzu kann die Anlage mindestens einen Deckel umfassen.

Der mindestens eine Sensor ist mit Vorteil im Behälter angeordnet. Dies umfasst Ausführungsformen, bei denen der Sensor in einer Ausbuchtung, einem Rohrstück, oder ähnlichem an einer Seitenwand angeordnet ist und mit dem Aufnahmeraum des Behälters fluidisch wirkverbunden ist. Um das Mass der erfolgten CO2-Absorption durch das Betongranulat bestimmen zu können, können verschiedene Sensortypen (wie oben beschrieben) verwendet werden. Ebenfalls ist eine beliebige Kombination einer oder mehrerer dieser Sensortypen denkbar. Da CO2 schwerer ist als Luft und sich daher grundsätzlich eher am Boden des Behälters ansammelt, können z.B. mehrere Konzentrationssensoren im Behälter in Richtung der Schwerkraft übereinander angeordnet sein.

Für eine gleichmässige und schnelle Zufuhr an CO2 in den Behälter kann der Einlass mehrere Gaseinlassdüsen umfassen. Diese können in dem Behälterboden und/oder mindestens einer Seitenwand angeordnet sein, insbesondere matrizenartig angeordnet sein. Auch eine matrizenartige Verteilung mehrerer Einlassdüsen im Aufnahmeraum des Behälters ist denkbar. Diese können über Rohrleitungen miteinander verbunden sein. Je nach Ausgestaltung des Behälters können die Gaseinlassdüsen auch um den Aufnahmeraum des Behälters, z.B. ringförmig, verteilt angeordnet sein. Der Behälter kann weiterhin einen Auslass zum Auslassen des Gases aus dem Behälter umfassen. In einer mit einem Auslass wirkverbundenen Ableitung kann ergänzend ein Auslassventil und/oder ein Durchlasssensor und/oder ein weiterer CO2-Konzentrationssensor angeordnet sein.

Je nach Ausgestaltung der Anlage kann diese ebenfalls mehrere Behälter umfassen. Beispielsweise kann die Begasung des Betongranulats in den mehreren Behältern parallel vorgenommen werden. Alternativ können die mehreren Behälter hintereinander in Reihe geschaltet werden. Überschüssiges Gas aus dem ersten Behälter kann z.B. in einen zweiten Behälter/ Auffangbehälter geleitet werden um in diesem das Verfahren, wie oben beschrieben, zu wiederholen. Alternativ denkbar ist jedoch auch, dass das überschüssige Gas aus dem ersten Behälter lediglich passiv von dem in dem Auffangbehälter angeordneten Betongranulat zumindest teilweise, insbesondere aber vollständig, absorbiert wird. Der zweite Behälter / Auffangbehälter kann somit mit der Ableitung des ersten Behälters fluidisch wirkverbindbar sein. Alternativ oder in Ergänzung kann der zweiten Behälter / Auffangbehälter ebenfalls mit dem Speichertank fluidisch über eine separate Zuleitung mit einem (zweiten) Einlassventil wirkverbindbar sein.

Die beschriebenen Ausführungsformen der Anlage können zur Ausführung des erfindungsgemässen Verfahrens dienen. Die zuvor beschriebenen Ausführungsformen des Verfahrens offenbaren zugleich entsprechend ausgestaltete Ausführungen der Anlage zur Durchführung des Verfahrens und umgekehrt.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Anlage zum Aufbereiten von Betongranulat;
- Fig. 2: Eine zweite Variante einer Anlage zum Aufbereiten von Betongranulat.

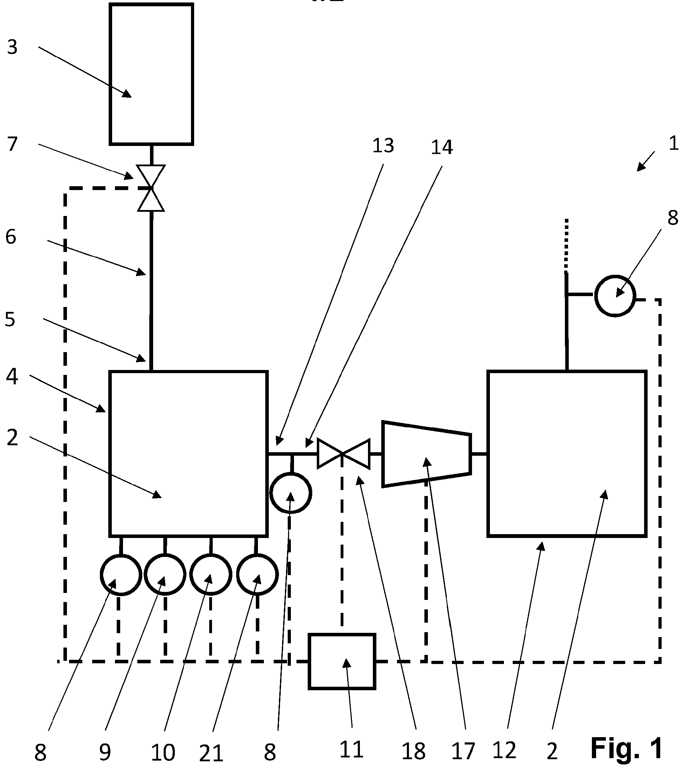

Figur 1 zeigt eine schematische Darstellung einer ersten Variante einer Anlage 1 (zum Durchführen des erfindungsgemässen Verfahrens) zum Aufbereiten von Betongranulat 2. Die Anlage 1 umfasst einen Speichertank 3 zum Speichern von einem Gas umfassend CO2 und mindestens einen zumindest bereichsweise gasdichten Behälter 4, 12. Im gezeigten Ausführungsbeispiel ist ein erster Behälter 4 und ein zweiter (Auffang-) Behälter 12 vorhanden. Beide Behälter 4, 12 können gasdicht verschliessbar sein und weisen (in einem geöffneten Zustand) je mindestens eine Öffnung (nicht gezeigt) zur Aufnahme und/oder Entnahme des Betongranulats 2 auf. Der erste Behälter 4 umfasst einen Einlass 5 zur Zuführung des Gases in den Behälter 4, welcher über eine Zuleitung 6 mit dem Speichertank 3 fluidisch wirkverbindbar ist. Der zweite Behälter 12 ist mit der an den Auslass 13 wirkverbundenen Ableitung des ersten Behälters wirkverbunden. In der Zuleitung 6, zwischen Speichertank 3 und dem ersten Behälter 4 ist ein Einlassventil 7 angeordnet, welches zur Kontrolle eines zugeführten Volumenstroms an Gas in den Behälter 4 dient. Das Einlassventil 7 kann ein Proportionalventil sein. Der Einlass 5 kann mehrere Gaseinlassdüsen umfassen. Für eine schnelle Befüllung können in dem Aufnahmeraum und/oder in dem Boden und/oder in der mindestens einen Seitenwand des Behälters 4 matrizenartig Gaseinlassdüsen angeordnet sein (nicht gezeigt). In der Leitung zwischen dem ersten und dem zweiten Behälter 4, 12 können eine Pumpe 17 und ein Auslassventil 18 angeordnet sein. Die Pumpe 17 kann dazu ausgelegt sein (bei geöffneten Einlassventil 7 und geöffneten Auslassventil 18) Gas aus dem Speichertank 3 in den ersten Behälter 4 zu saugen. Hierfür kann die Pumpe 17 eine Vakuumpumpe sein. Ergänzend kann ein CO2-Konzentrationssensor 8 in der Ableitung des ersten Behälters 4 (respektive in der Leitung zwischen den beiden Behältern 4, 12) angeordnet sein. Dieser dient zur Überwachung, wieviel CO2 aus dem Behälter 4 ausgelassen wird.

In dem ersten Behälter 4 sind weitere Sensoren 8, 9, 10 angeordnet. Auf Basis der gemessenen Werte dieser Sensoren kann ein Mass einer erfolgten CO2-Absorption durch das Betongranulat 2 bestimmt werden, wie oben beschrieben. Eine Kontrolleinheit 11 dient dazu die Zufuhr an Gas in Abhängigkeit des Masses der erfolgten CO2-Absorption zu kontrollieren. Die Sensoren 8, 9, 10, das Einlassventil 7, das Auslassventil 18 und die Pumpe 17 sind hierzu mit der Kontrolleinheit 11 wirkverbunden. Das Einlassventil 7 und/oder das Auslassventil 18 können einen Durchflusssensor umfassen. Die Kontrolleinheit 11 kann insbesondere dazu ausgelegt sein, die Gaszufuhr und/oder die Gasabfuhr automatisch zu kontrollieren, bis eine vorgegebene CO2-Sättigung des Betongranulats 2 erreicht ist.

Zur initialen Befüllung des Behälters 4 umfassend das Betongranulat 2 mit dem Gas kann zunächst das Einlassventil 7 und das Auslassventil 18 geöffnet werden. Die Pumpe 17 kann dann das Gas aus dem Speichertank 3 in den Behälter 4 saugen. Der Konzentrationssensor 8 in der Ableitung 14 des Behälters 4 kann die CO2-Konzentration überwachen. Wenn eine gewünschte maximale CO2-Konzentration im Behälter 4 erreicht ist kann das Auslassventil 18 geschlossen werden. Das Einlassventil 7 kann ebenfalls zumindest vorübergehend geschlossen werden. Die Sensoren 8, 9, 10 im Behälter 4 können den Druck, die CO2-Konzentration und die Temperatur im Behälter messen. Die gemessenen Werte dienen der Kontrolleinheit dazu, ein Mass für die Absorption von CO2 zu bestimmen. In Abhängigkeit des Masses für die Absorption wird Gas umfassend CO2 in den Behälter nachgeführt, so dass eine optimale und möglichst gleichmässige CO2-Sättigung, respektive Anreichung, des Betongranulats 2 mit CO2 erfolgt. Wenn die vorgegebene CO2-Sättigung erreicht ist, kann das überschüssige Gas aus dem ersten Behälter 4 ausgelassen werden. Im Vorteil wird dieses, wie im gezeigten Fall, in den ebenfalls mit Betongranulat 2 befüllten Auffangbehälter 12 geleitet. In diesem kann das überschüssige Gas mit Vorteil vollständig durch das Betongranulat 2 im Auffangbehälter 12 absorbiert werden. Dies kann insbesondere durch einen weiteren CO2-Konzentrationssensor 8, welcher in einer Ableitung des Auffangbehälters 12 angeordnet ist, überprüft werden. Alternativ oder ergänzend kann ebenfalls die Gewichtsdifferenz des Betongranulats 2 vor der Begasung und des mit CO2 angereicherte Betongranulat 2 nach der Begasung bestimmt werden. Für die Messung des Gewichts, respektive der Gewichtsdifferenz, kann eine Waage 22 am Behälter 4 angeordnet sein.

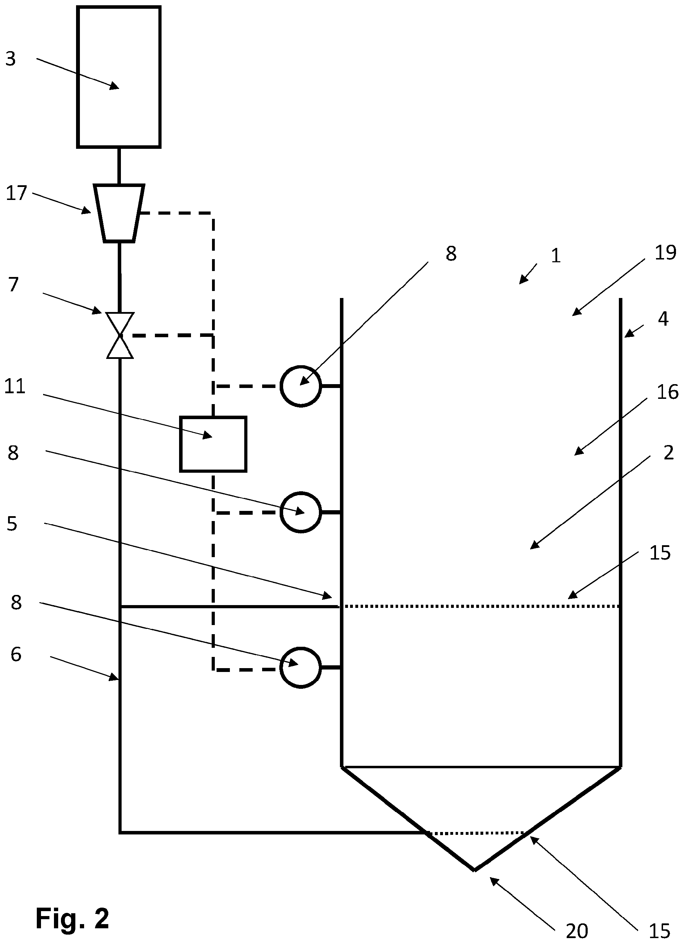

Figur 2 zeigt eine schematische Darstellung einer zweiten Variante einer Anlage 1 zum Aufbereiten von Betongranulat 2. Die Anlage 1 umfasst ebenfalls einen Speichertank 3 zum Speichern von einem Gas umfassend CO2 und einen zumindest bereichsweise gasdichten Behälter 4. Im gezeigten Beispiel ist der Behälter 4 nach oben hin offen ausgestaltet und umfasst eine obere Öffnung 19 zum Einfüllen von Betongranulat 2. In eine erste Richtung gegenüberliegend der oberen Öffnung 19 (Richtung der Schwerkraft) ist eine untere Öffnung 20 zum Auslassen des Betongranulats angeordnet. Die untere Öffnung 20 ist gasdicht verschlossen dargestellt. Eine ringförmige Seitenwand des Behälters ist zwischen der oberen und der unteren Öffnung 19, 20 angeordnet. Diese ist mit Vorteil ebenfalls gasdicht. Die ringförmige Seitenwand kann im Querschnitt rund oder eckig ausgestaltet sein. Nach dem Befüllen mit Betongranulat 2 wird das Einlassventil 7 geöffnet und der Behälter 4 von unten nach oben mit Gas umfassend CO2 befüllt. Hierzu ist im gezeigten Fall eine Pumpe 17 in der Zuleitung 6 angeordnet. Andere Anordnungen sind jedoch ebenfalls denkbar. Für eine schnelle Zufuhr von Gas umfasst der Behälter 4 mit Vorteil ringförmig angeordnete Gaseinlassdüsen 15. Diese können im Aufnahmeraum für das Betongranulat 2 des Behälters 4 angeordnet sein und durch Leitungen miteinander verbunden sein oder den Aufnahmeraum des Behälters umgeben. Im gezeigten Fall, sind zwei ringförmig angeordnete Gruppen an Gaseinlassdüsen 15 in erster Richtung übereinander angeordnet. Im Behälter 4 kann mindestens ein CO2-Konzentrationssensor 8 angeordnet sein. Mit Vorteil sind jedoch in die erste Richtung mehrere CO2-Konzentrationssensoren 8 verteilt angeordnet, welche jeweils mit einer Kontrolleinheit 11 wirkverbunden sind. Alternativ oder ergänzend sind ebenfalls andere Sensoren, wie Sensoren zur Messung der Temperatur, des Druckes oder relativen Feuchtigkeit möglich. Die CO2-Konzentrationssensoren 8 messen mit Vorteil kontinuierlich die CO2-Konzentration im Behälter 4. Die Kontrolleinheit 11 kontrolliert die Gaszufuhr in Abhängigkeit eines bestimmten Masses einer erfolgten CO2-Absorption durch das Betongranulat 2. Das Mass der erfolgten CO2-Absorption wird von der Kontrolleinheit 11 über die Messungen der Sensor(en) 8 bestimmt, wie im Zusammenhang mit dem Verfahren oben beschrieben. Das Mass der erfolgten CO2-Absorption kann hierbei die Differenz des in den Behälter 4 zugeführten CO2 und des gemessenen im Behälter 4 vorhandenen CO2 sein. Je nach bereits absorbierter Menge an CO2 kann Gas umfassend CO2 in den Behälter 4 nachgeführt werden. Dies sorgt für eine effiziente und gleichförmige Durchsättigung des Betongranulats 2 im Behälter 4. Der in Richtung der Schwerkraft oberste CO2-Konzentrationssensor 8 kann dazu verwendet werden, sicherzustellen, dass ein vorgegebener Füllstand 16 des Gases im Behälter 4 nicht überschritten wird. So kann verhindert werden, dass Gas aus der oberen Öffnung 19 entweicht. Des Weiteren kann der Prozess derart kontrolliert werden, dass sich immer eine ausreichend dicke Schicht unkarbonatisiertes oder nur teil karbonisiertes Betongranulat 2 an der Oberfläche (zur ersten Öffnung 19 hingewandt) im Behälter 4 befindet. Diese Schicht kann als Filterschicht dienen, um ungewollt aufsteigendes CO2 aufzunehmen. Wenn das mit CO2 angereicherte Betongranulat 2 aus dem Behälter 4 durch die untere Öffnung 20 entnommen wird, sackt diese Schicht nach unten und kann, z.B. bei Nachfüllen von weiteren Betongranulat 2 von oben, bei einer wiederholten Durchführung des Verfahrens entsprechend mit einer vorgegebenen CO2-Sättigung versehen werden.

### LISTE DER BEZUGSZEICHEN

| | | | |
|---|---|---|---|
| 1 | Anlage | 12 | Auffangbehälter |
| 2 | Betongranulat | 13 | Auslass |
| 3 | Speichertank | 14 | Ableitung |
| 4 | Behälter | 15 | Gaseinlassdüsen |
| 5 | Einlass | 16 | Füllstand |
| 6 | Zuleitung | 17 | Pumpe |
| 7 | Einlassventil | 18 | Auslassventil |
| 8 | Konzentrationssensor | 19 | Obere Öffnung |
| 9 | Drucksensor | 20 | Untere Öffnung |
| 10 | Temperatursensor | | |
| 11 | Kontrolleinheit | | |
| 21 | Waage | | |

## Patentansprüche

1. Verfahren zum Aufbereiten von Betongranulat für das anschliessende Recyceln des Betongranulats, umfassend die folgenden Verfahrensschritte:
a. Befüllen eines zumindest bereichsweise gasdichten Behälters (4) mit Betongranulat (2);
b. Zufuhr eines Volumenstroms an Gas umfassend CO2 in den Behälter (4) in Abhängigkeit eines über mindestens einen Sensor (8, 9) bestimmten Masses einer erfolgten CO2-Absorption durch das Betongranulat (2) im Behälter (4);
c. Feststellen, ob eine vorgegebene CO2-Sättigung des Betongranulats (2) zwischen 5kg CO2 pro 1000 kg und 1 5kg CO2 pro 1000 kg erreicht ist, und anderenfalls Fortführung von Verfahrensschritt b;
d. Entnahme des mit CO2 angereicherten Betongranulats (2).

2. Verfahren gemäss Patentanspruch 1, **dadurch gekennzeichnet, dass** das in den Behälter (4) zugeführte Gas 95% bis 100% CO2, insbesondere erneuerbares CO2, umfasst.

3. Verfahren gemäss einem der vorangehenden Patentansprüche, **dadurch gekennzeichnet, dass** das Mass der erfolgten CO2-Absorption über eine Messung eines Druckes und/oder einer CO2-Konzentration durch den mindestens einen Sensor (8, 9, 10) bestimmt wird.

4. Verfahren gemäss Patentanspruch 3, **dadurch gekennzeichnet, dass** das Mass der erfolgten CO2-Absorption zusätzlich eine gemessene Temperatur und/oder ein gemessenes Gewicht und/oder eine gemessene relative Feuchte im Behälter (4) berücksichtigt.

5. Verfahren gemäss einem der vorangehenden Patentansprüche, **dadurch gekennzeichnet, dass** der zugeführte Volumenstrom an Gas reduziert oder zeitweise unterbrochen wird, wenn ein gewünschter Füllstand (16) des Behälters (4) mit dem Gas und/oder eine vorgegebene CO2-Konzentration im Behälter, insbesondere eine Konzentration über 95% CO2, erreicht ist.

6. Verfahren gemäss Patentanspruch 5, **dadurch gekennzeichnet, dass** der reduzierte oder zeitweise unterbrochene Volumenstrom an Gas umfassend CO2 das durch das im Behälter angeordnete Betongranulat bereits absorbierte CO2 ausgleicht.

7. Verfahren gemäss einem der vorangehenden Patentansprüche, **dadurch gekennzeichnet, dass** nach dem Erreichen der vorgegebenen CO2-Sättigung überschüssiges Gas aus dem Behälter (4) in einen Auffangbehälter (12) geführt wird, der mit weiteren Betongranulat (2) gefüllt ist, welches das überschüssige Gas zumindest teilweise absorbiert, insbesondere vollständig absorbiert.

8. Verfahren gemäss Patentanspruch 7, **dadurch gekennzeichnet, dass** in dem Auffangbehälter (12) die Verfahrensschritte b bis d gemäss Patentanspruch 1 wiederholt werden.

## Claims

1. Method for preparing concrete granulate for subsequent recycling of the concrete granulate, comprising the following method steps:
a. Filling an at least partially gas-tight container (4) with concrete granulate (2);
b. Supplying a volume flow of gas comprising CO2 into the container (4) as a function of a measure of CO2 absorption by the concrete granulate (2) in the container (4) determined by at least one sensor (8,9);
c. Determining whether a predetermined CO2 saturation of the concrete granulate (2) between 5 kg CO2 per 1000 kg and 15 kg CO2 per 1000 kg has been reached, and otherwise continuing method step b;
d. Removing the CO2-enriched concrete granulate (2).

2. Method according to claim 1, **characterized in that** the gas fed into the container (4) comprises 95% to 100% CO2, in particular renewable CO2.

3. Method according to one of the preceding claims, **characterized in that** the measure of the occurred CO2 absorption is determined by measuring a pressure and/or a CO2 concentration by the at least one sensor (8, 9, 10).

4. Method according to claim 3, **characterized in that** the measure of the occurred CO2 absorption additionally takes into account a measured temperature and/or a measured weight and/or a measured relative humidity in the container (4).

5. Method according to one of the preceding claims, **characterized in that** the volume flow of gas supplied is reduced or temporarily interrupted when a desired filling level (16) of the container (4) with the gas and/or a predetermined CO2 concentration in the container, in particular a concentration above 95% CO2, is reached.

6. Method according to claim 5, **characterized in that** the reduced or temporarily interrupted volume flow of gas comprising CO2 compensates for the CO2 already absorbed by the concrete granulate arranged in the container.

7. Method according to one of the preceding claims, **characterized in that,** after the predetermined CO2 saturation has been reached, excess gas is fed from the container (4) into a collecting container (12) which is filled with further concrete granulate (2) which at least partially absorb, in particular completely absorb, the excess gas.

8. Method according to claim 7, **characterized in that** the method steps b to d according to claim 1 are repeated in the collecting container (12).

## Revendications

1. Procédé de préparation de granulat de béton pour le recyclage subséquent des granulats de béton, comprenant les étapes de procédé suivantes :
a. Remplissage d'un récipient (4) au moins partiellement étanche aux gaz avec des granulats de béton (2) ;
b. Amenée d'un flux volumique de gaz comprenant du CO2 dans le récipient (4) en fonction d'une mesure d'une absorption de CO2, déterminée par au moins un capteur (8, 9), par le granulat de béton (2) dans le récipient (4) ;
c. Déterminer si une saturation en CO2 prédéterminée du granulat de béton (2) entre 5 kg de CO2 par 1000 kg et 15 kg de CO2 par 1000 kg est atteinte et, dans le cas contraire, poursuivre l'étape b du procédé ;
d. Prélèvement des granulats de béton (2) enrichis en CO2.

2. Procédé selon la revendication 1, **caractérisé en ce que** le gaz introduit dans le récipient (4) comprend de 95% à 100% de CO2, en particulier du CO2 renouvelable.

3. Procédé selon l'une des revendications précédentes, **caractérisé en ce que** la mesure de l'absorption de CO2 effectuée est déterminée par une mesure d'une pression et/ou d'une concentration de CO2 par ledit au moins un capteur (8, 9, 10).

4. Procédé selon la revendication 3, **caractérisé en ce que** la mesure de l'absorption de CO2 effectuée tient compte en outre d'une température mesurée et/ou d'un poids mesuré et/ou d'une humidité relative mesurée dans le récipient (4).

5. Procédé selon l'une des revendications précédentes, **caractérisé en ce que** le flux volumique de gaz amené est réduit ou interrompu temporairement lorsqu'un niveau de remplissage (16) souhaité du récipient (4) avec le gaz et/ou une concentration de CO2 prédéterminée dans le récipient, en particulier une concentration supérieure à 95% de CO2, est atteint.

6. Procédé selon la revendication 5, **caractérisé en ce que** le débit volumique réduit ou temporairement interrompu de gaz comprenant du CO2 compense le CO2 déjà absorbé par les granulat de béton arrangés dans le contenant.

7. Procédé selon l'une des revendications précédentes, **caractérisé en ce qu'**après avoir atteint la saturation en CO2 prédéfinie, le gaz excédentaire est conduit du récipient (4) dans un récipient collecteur (12) qui est rempli d'autres granulat de béton (2) qui absorbent au moins partiellement le gaz excédentaire, en particulier l'absorbent complètement.

8. Procédé selon la revendication 7, **caractérisé en ce que** les étapes b à d du procédé selon la revendication 1 sont répétées dans le récipient collecteur (12).
